# EUROPEAN PATENT APPLICATION

(11) **EP 0 703 522 A2**
(43) Date of publication of application: **27.03.1996**
(21) Application number: 95306679.2
(22) Date of filing: 21.09.1995
(51) Int. Cl.: G06F 1/16

(54) **Multiple computer system**

(30) Priority: 26.09.1994 US 278585
(71) Applicant: AT&T GLOBAL INFORMATION SOLUTIONS INTERNATIONAL INC., Dayton, Ohio 45479 (US)
(72) Inventor: Myslinski, Theodore A., Freehold, NJ 07728 (US); Johnson, Robert H., East Windsor NJ 08520 (US); Perrine, Gerald A., Bridgewater, NJ 0807 (US)
(74) Representative: Robinson, Robert George

(57) **Abstract**

A plurality of different arrangements are disclosed in which different types of personal computers have the capability of operating in a completely independent manner and can also be combined to transfer information to each other and to share resources, peripherals and processing power. The different types of computers may include a desktop computer (116,132,142), a laptop computer (110,122, 146) and a personal digital assistant (114,120,128,130,138, 140,150). When combined, one or more computers (the guest or guests) may be physically positioned in one or more openings (112,118,124,126,134,136,144,148) within the housing of another computer (the host).

## Description

The present invention relates to multiple computer systems.

In the field of personal computers (PCs), there have been two broad categories or types, namely laptop PCs and desktop PCs. More recently, a third category or type of personal computer, the personal digital assistant, has come into use. Each of these categories has certain advantages over the other. For example, the laptop PC has the advantages that it can be taken with the user on business trips, can be used in areas where standard household current is not available, and is relatively small and light in weight. On the other hand, the desktop PC is not dependent on a battery having a limited life, normally has a larger display, has an easier-to-use keyboard and "mouse", can be permanently connected to a network which includes a printer and other desirable peripheral units, and may have higher capabilities in terms of such things as memory, processing power, etc., but is not portable, and normally requires a source of household current. The personal digital assistant is even smaller than the laptop computer and is thus easier to carry on a trip or a visit to a customer, but has less capability in terms of computer power and versatility. However, each of these computer types has a limited computer power and capability.

It is an object of the present invention to provide a computer system having a high computer power and capability.

Therefore, according to the present invention there is provided a computing system, characterized by: a first computer capable of fully independent operation; a second computer capable of fully independent operation; and an interface means coupling said first and second computers to enable the combined computers to share resources and computing power.

Embodiments of the invention will now be described with reference to the accompanying drawings, in which:-
Fig. 1 is a block diagram of two computers, including interfaces for coupling them;
Fig. 2 is a block diagram of three computers, including interfaces for coupling two of the computers to the third computer;
Fig. 3 is a block diagram of three computers, with one of the computers having a first interface for coupling to a second computer and a second interface for coupling to a third computer;
Fig. 4 is a perspective view of a laptop computer and a personal digital assistant, with the laptop computer having an aperture for receiving the personal digital assistant within the housing of the laptop computer;
Fig. 5 is a perspective view of a desktop computer and a personal digital assistant, with the desktop computer having an aperture for receiving the personal digital assistant within the housing of the desktop computer;
Fig. 6 is a perspective view of a laptop computer and two personal digital assistants, with the laptop computer having two apertures for receiving the two personal digital assistants within the housing of the laptop computer;
Fig. 7 is a perspective view of a desktop computer and two personal digital assistants, with the desktop computer having two apertures for receiving the two personal digital assistants within the housing of the desktop computer; and
Fig. 8 is a perspective view of a desktop computer, a laptop computer and a personal digital assistant, with the desktop computer having an aperture for receiving the laptop computer within its housing, and the laptop computer in turn having an aperture for receiving the personal digital assistant within its housing.

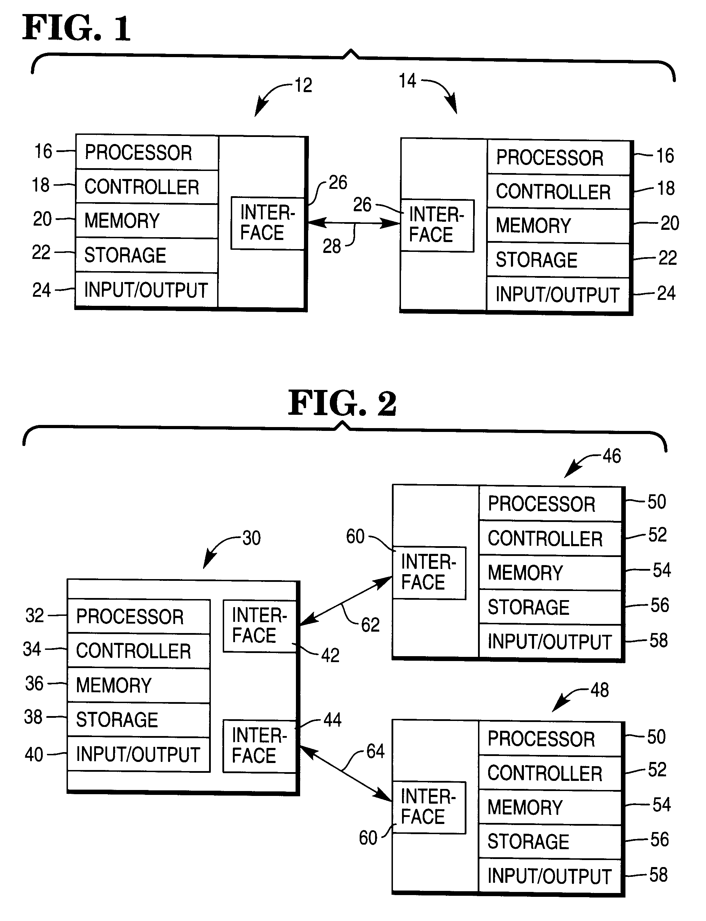

Shown in Fig. 1 are two personal computers 12 and 14, one of which may be either a desktop computer, a laptop computer or a personal digital assistant, while the other is another of these types, as will be subsequently described. The computers 12 and 14 may be conventional in configuration, each including a processor 16, a controller 18, a memory 20, storage 22 such as disk storage, an input/output apparatus 24, such as a keyboard, a CRT display, etc., and an interface 26 to enable the computer to be coupled to another computer or to other apparatus. The double-headed arrow 28 indicates the manner in which the two computers 12 and 14 can be coupled when it is desired to do so.

Shown in Fig. 2 is another arrangement in which a first computer 30 includes a processor 32, a controller 34, a memory 36, storage 38, input/output 40 and two interfaces 42 and 44. Also included in the arrangement of Fig. 2 are two additional computers 46 and 48. Each of these computers includes a processor 50, a controller 52, a memory 54, storage 56, input/output 58 and an interface 60. In this arrangement, by virtue of the two interfaces 42 and 44, both of the computers 46 and 48 can be simultaneously coupled to the computer 30, as represented by the double-headed arrows 62 and 64. The arrangement of Fig. 2 might be employed, for example, in a configuration in which computer 30 is a desktop computer and the computers 46 and 48 are personal digital assistants. If desired, additional interfaces similar to the interfaces 42 and 44 could be provided to enable additional computers similar to computers 46 and 48 to be coupled to the computer 30.

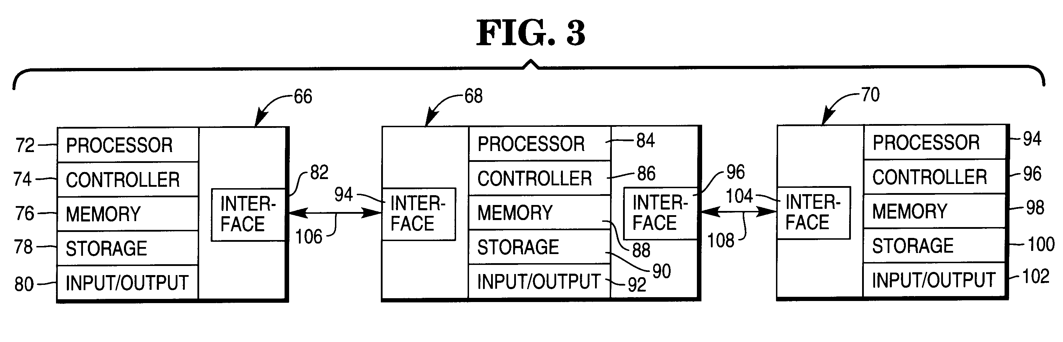

Shown in Fig. 3 is still another arrangement in which first, second and third computers 66, 68 and 70 are included. The computer 66 includes a processor 72, a controller 74, a memory 76, storage 78, input/output 80 and an interface 82. The computer 68 includes a processor 84, a controller 86, a memory 88, storage 90 and two interfaces 94 and 96. The computer 70 includes a processor 94, a controller 96, a memory 98 storage 100, input/output 102 and an interface 104. The arrangement of Fig. 3 might be employed, for example, in a configuration in which computer 66 is a desktop computer, computer 68 is a laptop computer and computer 70 is a personal digital assistant. The coupling of computers 66 and 68 is represented by the double-headed arrow 106, and the coupling of computers 68 and 70 is represented by the double-headed arrow 108.

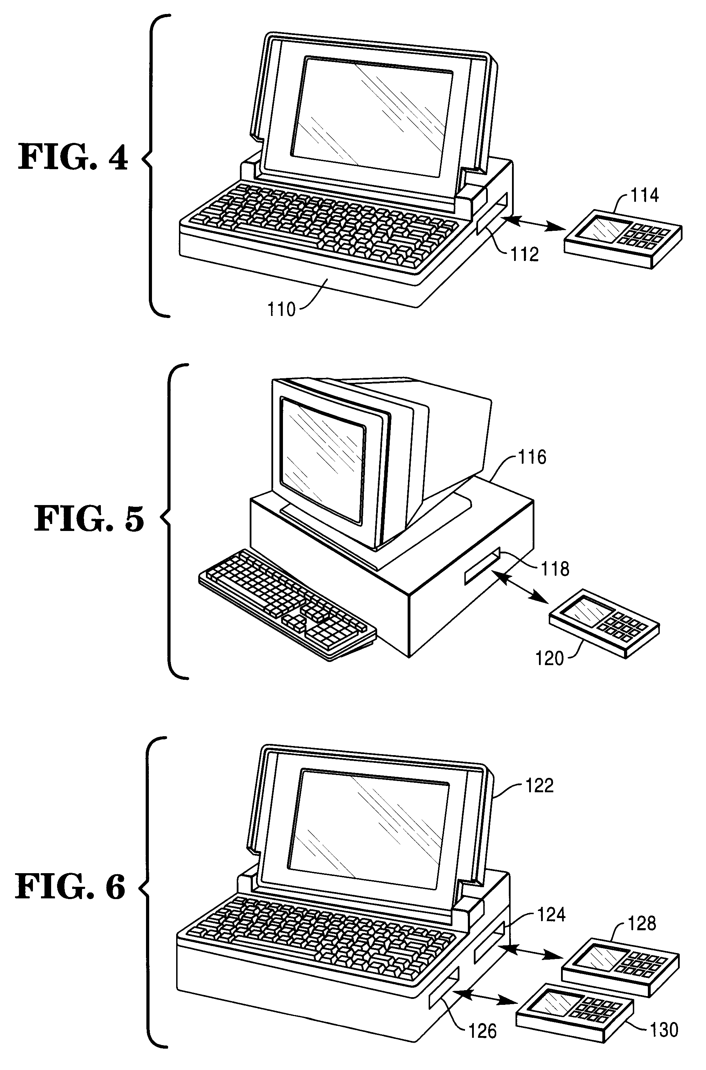

Figs. 4 to 8 inclusive are pictorial representations of some of the possible combinations which may be made when it is desired to combine certain of the various types of personal computers. Again, it is emphasized that all of these computers are capable of operating on their own and need not be combined to function, but that such may provide important advantages in appropriate circumstances.

Referring to Fig. 4, a laptop computer 110 is provided with an opening or receptacle 112 to receive a personal digital assistant 114. Similarly in Fig. 5, a desktop computer 116 is provided with an opening or receptacle 118 to receive a personal digital assistant 120.

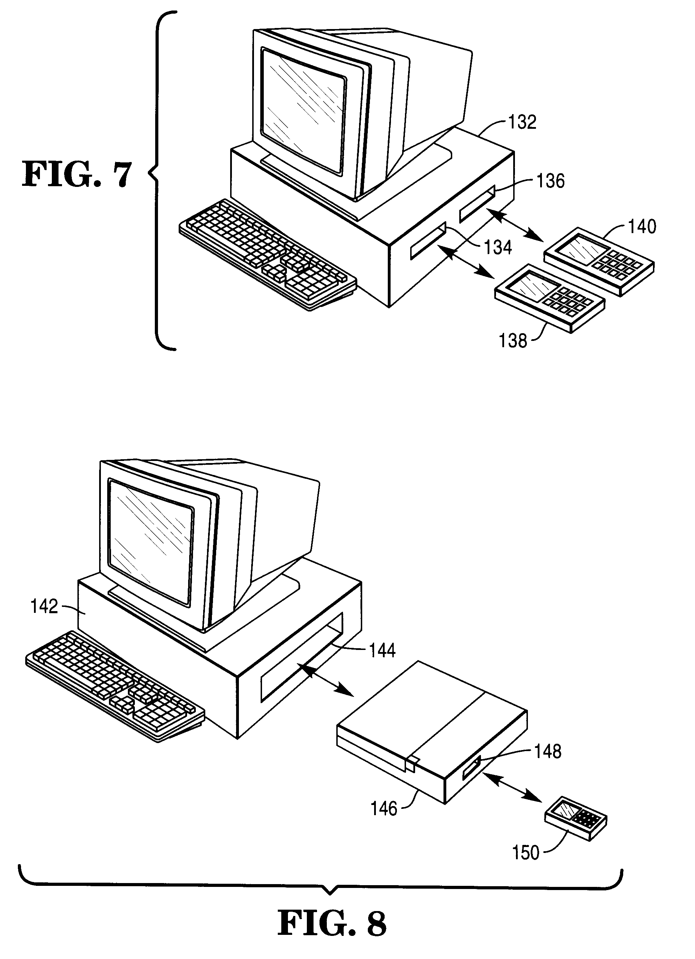

The embodiment of Fig. 6 is somewhat similar to that of Fig. 4, except that a laptop computer 122 is provided with a pair of openings or receptacles 124 and 126 to receive personal digital assistants 128 and 130. In the embodiment of Fig. 7, a desktop computer 132 is provided with a pair of openings or receptacles 134 and 136 to receive a pair of personal digital assistants 138 and 140. As was suggested in the description of the diagram of Fig. 2, three or more receptacles in the computers of Figs. 6 and 7 could be provided to receive additional personal digital assistants. It will be noted that in the embodiments of Fig. 5 and 7, one or more laptop computers, rather than a personal digital assistant, could be combined with a desktop computer, by providing a suitable opening or receptacle and coupling, if desired.

A multi-stage combination is shown in the embodiment of Fig. 8, in which a desktop computer 142 is provided with an opening or receptacle 144 to receive a laptop computer 146. The laptop computer 146, in turn, is provided with an opening or receptacle 148 to receive a personal digital assistant 150. This arrangement is represented in block form in Fig. 3. The "daisy chain" arrangement of Fig. 8 could comprise two or more receptacles 144 in the desktop computer 142 to receive two or more laptop computers 146, each of which, in turn, could be provided with two or more receptacles 148 to receive additional personal digital assistants 150.

The advantages of combining the various types of computers in the various arrangements shown in the drawings and described above may readily be seen. For example, when a laptop computer and a personal digital assistant are combined, the laptop computer could off-load printing, communications or other serial/parallel port activity to the personal digital assistant, freeing the laptop computer to finish CPU-intensive tasks more quickly. Similarly, in the combination of a desktop computer and a laptop computer, the laptop computer could assist the desktop computer in computational activities, serving as a parallel processor.

Thus there have been described embodiments wherein one computer, which may be designated as the host, is capable of physically accommodating one or more smaller computers, which may be designated as the guests, in one or more locations within the host. One advantage of such an arrangement is that the host can be stationary and the guest can be portable. For example, a desktop type of computer can accommodate one or more personal digital assistant types of computers. When used separately, each unit can perform in a fully functional manner as an independent device. When the two or more units are combined, each can transfer information to the other and can share resources, peripherals and computing power. This concept also extends to other host/guest configurations as described above.

## Claims

1. A computing system, characterized by: a first computer (12,30,66,110,116, 122,132,142) capable of fully independent operation; a second computer (14,46,68,114,120, 128,138,146) capable of fully independent operation; and an interface means (26,28,42,60,62, 82,94,106) coupling said first and second computers to enable the combined computers to share resources and computing power.

2. A computing system according to claim 1, characterized in that said first computer (12,30,66,110,116,122,132,142) includes an opening (112,118, 124,134,144) for receiving said second computer (14,46,68,114,120,128,138,146) therein.

3. A computing system according to claim 1 or claim 2, characterized in that said first computer (142) is a desktop computer and said second computer (146) is a laptop computer.

4. A computing system according to claim 1 or claim 2, characterized in that said first computer (116,122) is a desktop computer and said second computer (120,128) is a personal digital assistant.

5. A computing system of claim 1 or claim 2, characterized in that, said first computer (110,122) is a laptop computer and said second computer (114,128) is a personal digital assistant.

6. A computing system, according to claim 1, characterized by a third computer (48,130,140) capable of fully independent operation; and a further interface means (44,60,64) coupling said third computer (48,130,140) to said first computer (30).

7. A computing system according to claim 6, characterized in that said first computer includes first and second openings (124,126,134,136) for receiving said second (128,138) and third (130,140) computers therein.

8. A computing system according to claim 1, characterized by a third computer (70,150) capable of fully independent operation; and a further interface means (96,104,108) coupling said third computer (70,150) to said second computer (68,146).

9. A computing system according to claim 8, characterized in that said second computer (146) includes a second opening (148) for receiving said third computer (150).
